# EUROPÄISCHE PATENTSCHRIFT

(11) **EP 2 108 963 B1**
(45) Veröffentlichungstag und Bekanntmachung des Hinweises auf die Patenterteilung: **24.09.2014**
(21) Anmeldenummer: 09004825.7
(22) Anmeldetag: 01.04.2009
(51) Int. Cl.: G01P 3/481, G01P 3/489, G01D 5/20, G01P 13/04

(54) **Anordnung zum Erfassen einer Drehung eines Drehelements**
Device for detecting a rotation of a rotary element
Dispositif de détection d'une rotation d'un élément rotatif

(30) Priorität: 09.04.2008 DE 102008018099
(43) Veröffentlichungstag der Anmeldung: 14.10.2009
(73) Patentinhaber: Prof. Dr. Horst Ziegler und Partner GbR, 33100 Paderborn (DE)
(72) Erfinder: Ziegler, Horst, 33100 Paderborn (DE); Behlen, Horst, 33175 Bad Lippspringe (DE)
(74) Vertreter: Blaumeier, Jörg

(56) Entgegenhaltungen:
- EP-A1- 0 121 734
- EP-A1- 0 408 084
- EP-A1- 1 785 732
- EP-A1- 1 947 468
- EP-A2- 0 198 272
- US-A- 3 286 200
- US-A- 4 400 633
- US-A- 4 425 511
- US-A- 6 043 644
- US-A1- 2008 164 869

## Beschreibung

Die Erfindung betrifft eine Anordnung zum Erfassen einer Drehung eines Drehelements.

Ein in der Verbrauchsmesstechnik häufig anzutreffendes Problem besteht darin, die Rotationsbewegung eines mit verbrauchsproportionaler Drehzahl drehenden Drehelements elektronisch abzutasten. Derartige Verbrauchsmesser finden sich beispielsweise in Wasser-, Wärme-, Gas- und Stromzählern. Im Rahmen der Abtastung wird dabei ein elektrisches Signal erzeugt, das durch Auswertemittel weiterverarbeitet wird, um den berechneten Verbrauch dann über ein Anzeigesystem darzustellen oder auch einem Abrechnungssystem zuzuführen. Eine besondere Herausforderung stellt dabei dar, dass die Anordnung gegen Temperatur, Feuchtigkeit, Schmutz und elektrische und magnetische Gleich- und Wechselfelder sowie Gleich- und Wechsellicht unempfindlich sein soll, einerseits um die Funktionsfähigkeit der Anordnung zu erhalten und andererseits, um externe Manipulationen auszuschließen. Auch kann es vorkommen, dass sich der Verbrauchsmesser aus einem länger anhaltenden Stillstand in einer sehr kurzen Zeitspanne auf eine maximale Verbrauchsdetektion einstellen muss. Des Weiteren soll der Stromverbrauch für die Anordnung möglichst gering sein, um das Betreiben des Verbrauchsmessers mittels einer Batterie über mindestens eine Eichperiode, die sich über einen Zeitraum von mehreren Jahren erstreckt, zu gewährleisten.

Um diese Anforderungen erfüllen zu können, wurden im Wesentlichen Verfahren mit einer kapazitiven Abtastung entwickelt, die durch einen hochohmigen Spannungsbetrieb den Strombedarf gering halten und einfach zu implementieren sind. Aus der EP 1 033 578 A2 ist eine Anordnung zum Detektieren einer Rotation eines Drehelements bekannt, die ein Drehelement mit einer elektrisch leitenden Teilfläche sowie wenigstens zwei Elektroden aufweist, von denen wenigstens eine als Anregungselektrode und wenigstens eine als Empfängerelektrode dient, und die bei Rotation des Drehelements über die elektrisch leitende Teilfläche kapazitiv gekoppelt sind. Die Anregungselektrode wird mit Spannungspulsen beaufschlagt, und an der Empfängerelektrode werden Empfängersignale abgegriffen. DE 10 2005 054 342 A1 offenbart eine Anordnung zum Detektieren einer Rotation eines Drehelements, bei der eine Anregungselektrode und Empfängerelektroden über ein Drehelement kapazitiv gekoppelt sind, wobei das Drehelement eine elektrisch leitende Teilfläche aufweist, wodurch bei Drehung des Drehelements die Empfängersignale der Empfängerelektroden moduliert wird. Allerdings bewirkt die Hochohmigkeit der kapazitiven Abtastung eine leichte Störbarkeit durch mittel- und hochfrequente Störfelder. Des Weiteren wird die kapazitive Abtastung durch die Anwesenheit von Wasser gestört, was in der hohen Dielektrizitätskonstante des Wassers begründet liegt. Daher ist die direkte kapazitive Abtastung eines Flügelrads in Wasser unmöglich. Aber auch bei anderen Verbrauchsmessungen kann Kondenswasser die kapazitive Abtastung stören.

DE 35 19 215 C2 offenbart einen Fühler zum Umsetzen einer mechanischen Eingangsgröße in eine elektrische Ausgangsgröße, wobei eine jeweils an einen Schwingkreis gekoppelte Geberspule und Empfängerspule vorgesehen ist, und wobei die Geberspule und Empfängerspule im Wesentlichen aufeinander senkrecht stehen.

Die DE 39 23 398 C1 beschreibt einen Umdrehungsdetektor, bei dem ein Rotor mit mehreren Schwingkreisen kapazitiv gekoppelt ist, wobei zur Umdrehungsbestimmung in den Schwingkreisen erzeugte Resonanzen ausgewertet werden. US 2008/164869 A1 betrifft einen induktiven Winkelpositionssensor, bei dem eine teilweise metallisierte Scheibe als Rotor vorgesehen ist und ein Stator eine Primärspule und mehrere Sekundärspulen umfasst, wobei die Sekundärspulen im Wesentlichen symmetrisch in Paaren relativ zur Drehachse angeordnet sind. Die Primärspule wird über ein Zuführmittel angeregt, das als Pulsgenerator ausgebildet sein kann. Dabei kann die Pulslänge im Bereich einer Nanosekunde liegen, so dass der Stromverbrauch minimiert wird. Entsprechend dauert die Messung lediglich eine Nanosekunde an. Die Sekundärspulen sind in Paaren gekoppelt und mit einem Komparator verbunden, der die Spannungen vergleicht. Zur weiteren Auswertung der Komparatorsignale ist nur erwähnt, dass statt der Komparatoren auch ein Spannungsmessmittel verwendet werden kann, dessen Messwerte durch Software oder elektronische Mittel weiter ausgewertet werden können, um das Signal von dem Offset zu trennen

US 6,043,644 A betrifft einen induktiven kontaktlosen Sensor, der wenigstens eine Primärspule zur Erzeugung eines magnetischen Wechselfeldes und wenigstens zwei Sekundärspulen zum Messen eines solchen Feldes umfasst, welche Spulen planar sind. Ein Drehrad enthält metallische Ziele, die die magnetischen Feldlinien der Primärspule ändern. Dabei wird die Primärspule durch einen Wechselstrom betrieben. Zur Auswertung werden durch den Detektionsstromkreis die von den Sekundärspulen aufgefangenen Signale demoduliert und die Amplitudenmodulationen auswertet.

EP 0 121 734 A1 betrifft eine Messvorrichtung für die Rotation einer Turbine eines Wasserzählers. Hier ist eine andere Ausgestaltung einer Messeinrichtung mit Spulen beschrieben, bei der entweder ein den magnetischen Fluss abschirmender Schirm oder den magnetischen Fluss verstärkende Stangen in einer Aussparung im Messgehäuse, also außerhalb des eigentlichen Fluidflusses, geführt sind. Es werden gewickelte Spulen verwendet. Dort werden Signale eingesetzt, die eine sehr kurze Dauer haben und eine Sägezahnform besitzen. Die Ausgänge der den Empfangsspulen zugeordneten Verstärkungsmittel werden unmittelbar dem Eingang einer Kippschaltung oder eines Flip-Flops zugeführt, der wiederum mit einem elektronischen Zähler verbunden ist, welcher die Zählung vornimmt.

Der Erfindung liegt damit die Aufgabe zugrunde, eine Anordnung zum Erfassen einer Drehung eines Drehelements anzugeben, die gegen externe Störeinflüsse unempfindlich und einfach zu realisieren ist und dabei einen geringen Strombedarf aufweist.

Zur Lösung der Aufgabe ist erfindungsgemäß eine Anordnung zum Erfassen einer Drehung eines Drehelements mit den Merkmalen des Anspruchs 1 vorgesehen.

Erfindungsgemäß ist also vorgesehen, die Drehungserfassung des Drehelements durch eine induktive Kopplung zwischen wenigstens einer Geberspule und wenigstens einer Empfängerspule, die durch die Drehstellung des Drehelements moduliert ist, induktiv zu erfassen. Mit induktiver Kopplung wird die Übertragung von Energie zwischen zwei Spulen durch ein gemeinsames Magnetfeld beschrieben, die auch bei niederohmigem Spannungsbetrieb realisiert werden kann. Daher ist die erfindungsgemäße Anordnung zur Drehungserfassung eines Drehelements unempfindlich gegenüber Störeinflüssen durch Wasser, wodurch das Drehelement auch in diesem verwendet werden kann. Durch die gepulste Bestromung der Geberspule wird ein niedriger Stromverbrauch realisiert.

Der Strompuls besteht aus einer durch einen Schwingkreis erzeugten, gedämpften Schwingung.

Ein Strompuls ist ein Strom, der nur innerhalb einer begrenzten Zeit vorhanden ist. Auf ihn folgt eine Pause. Sind die Pausen zwischen den Strompulsen von gleicher Dauer, handelt es sich um Einzelimpulse. Eine Gruppe von Einzelimpulsen ist dementsprechend das mehrmalige Vorhandensein des Stroms mit dazwischen liegenden Pausen, wobei eine Gruppe von der nächsten durch eine längere Pause getrennt ist als die Einzelimpulse einer Gruppe.

Eine Gruppe von Einzelimpulsen wird auch "Burst" genannt. Ein solcher Burst kann auch bei Anlegen einer Wechselspannung und dann ohne Pausen zwischen den Perioden der Schwingung erzeugt werden, dieser wird Wechselspannungsburst genannt.

Durch entsprechende Ausgestaltung der Mittel zum Beaufschlagen der Geberspule wird erfindungsgemäß eine gedämpfte Schwingung zur Erzeugung eines Empfängerspannungssignals verwendet. Diese ist einem Wechselspannungsburst ähnlich, lässt sich allerdings stromsparend realisieren.

Vorzugsweise kann die Sensoreinrichtung zwei, drei oder vier im Wesentlichen koplanar und flächig angeordnete Empfängerspulen aufweisen, die im Wesentlichen um 90° versetzt zueinander angeordnet sind. Durch Verwendung von zwei Empfängerspulen, die zur Geberspule gleich beabstandet sind und um 90° zueinander versetzt angeordnet sind, kann nicht nur die Vollumdrehung des Drehelements erkannt werden, sondern zusätzlich die Drehrichtung. Bei Verwendung von drei Empfängerspulen weist die Sensoreinrichtung zwei einander gegenüberliegende Empfängerspulen sowie eine bezüglich dieser beiden jeweils um 90° versetzte Empfängerspule auf. Diese dann dritte Empfängerspule kann zum Abgleich der ersten Empfängerspule herangezogen werden, indem die jeweiligen Empfängerspannungssignale verglichen werden oder eine Differenzspannungsbildung erfolgt. Dadurch lassen sich insbesondere Toleranzen oder Variationen durch Bauelementetoleranzen, Betriebsspannungs- oder Temperaturänderungen kompensieren. Bei Verwendung einer vierten Empfängerspule kann dieses Abgleichkonzept auch auf die zweite Empfängerspule übertragen werden. Im Falle von vier Empfängerspulen sind diese symmetrisch um die Geberspule verteilt. Mit dieser hochsymmetrischen und toleranzminimalen Fünf-Spulen-Geometrie kann sowohl die Drehrichtungserkennung als auch die Störgrößenelimination optimal realisiert werden.

Vorzugsweise können die Auswertemittel wenigstens einen Multiplexer umfassen, wobei der wenigstens eine Multiplexer die parallel anfallenden Empfängerspannungssignale der Empfängerspulen durch wiederholte Strompulsanregung der Geberspule in ein einziges serielles Empfängerspannungssignal umwandelt. Bei jeglicher Verwendung eines Multiplexers sind jeweils mehrere Bestromungen der Geberspule erforderlich, deren zeitlicher Abstand klein gegenüber dem Abtastzeitabstand sein muss, damit sich das Drehelement dazwischen nur minimal weitergedreht hat und sich deshalb die Empfängerspannungssignale zwischen den zwei Bestromungen nur minimal verändert haben. Durch die Verwendung eines analogen Multiplexer wird es möglich, den Aufwand an Auswertemitteln zu reduzieren. Die Empfängerspannungssignale können dann über eine einzige Leitung laufen und dementsprechend fallen die jeweils benötigten Auswertemittel nur einmal und nicht wie im Falle von vier Empfängerspulen vier Mal an.

Vorteilhafterweise können die Empfängerspannungssignale von jeweils zwei, bevorzugt einander gegenüberliegender, Empfängerspulen durch einen Multiplexer in ein einziges serielles Empfängerspannungssignal zusammenfassbar sein. Auf diese Art und Weise werden genau die Empfängerspannungssignale zusammengefasst, durch deren Kombination eine Fehlerminimierung erreicht werden soll. Insbesondere können die Signale im Rahmen der weiteren Auswertung voneinander subtrahiert werden, um ein Differenzspannungssignal zu gewinnen, es ist aber auch eine Mittelwertsbildung denkbar. Bei Vorhandensein von vier Empfängerspulen werden also jeweils zwei Empfängerspannungssignale auf einen Multiplexer gegeben und in ein serielles Signal umgewandelt, das dann weiterverarbeitet werden kann.

Mit besonderem Vorteil können die Auswertemittel wenigstens eine Transistor-Schaltung umfassen, mit der das an diese gegebene Empfängerspannungssignal verstärkbar ist. Die Anzahl der Transistor-Schaltungen ist erstens von der Anzahl der Empfängerspulen und zweitens von der Verwendung eines oder mehrerer Multiplexer abhängig. Grundsätzlich kann jeder Empfängerspule eine Transistor-Schaltung nachgeschaltet sein, bei Verwendung eines Multiplexers ist es allerdings sinnvoll, die Transistor-Schaltung nach diesem Multiplexer anzuordnen und damit das serielle Empfängerspannungssignal zu verstärken, wodurch die Anzahl der zu verwendenden Transistor-Schaltungen verringert werden kann. Werden vier Empfängerspannungssignale jeweils zweier einander gegenüberliegender Spulen durch zwei Multiplexer zusammengefasst, werden dementsprechend zwei Transistor-Schaltungen benötigt, wird ein einziger Multiplexer verwendet, um die Empfängerspannungssignale aller Spulen zusammenzufassen, genügt also auch eine einzige Transistor-Schaltung. Die hier angestellten Überlegungen bezüglich der Transistor-Schaltung gelten analog auch für die im Rahmen der weiteren Auswertung eingesetzten Komponenten.
Die Auswertemittel umfassen wenigstens einen Halbwellenintegrierer mit einem Speicherkondensator und einer Diode.

Mit besonderem Vorteil können die Auswertemittel einen Entladewiderstand zum Entladen des Speicherkondensators bis zum Erreichen einer Schwellenspannung umfassen, wobei die Entladezeit als Maß für die Höhe des aufsummierten Empfängerspannungssignals dient. Alternativ kann vorgesehen sein, dass die Auswertemittel einen A/D-Wandler zum Digitalisieren des aufsummierten Empfängerspannungssignals umfassen. Wird zur Bestimmung des aufsummierten Empfängerspannungssignals ein Entladewiderstand verwendet, kann auch die als Maß für die Höhe des aufsummierten Empfängerspannungssignals dienende Entladezeit leicht digitalisiert werden.

Mit besonderem Vorteil können die Auswertemittel wenigstens einen Komparator umfassen. Der Komparator dient zum Vergleich zweier Größen und gibt in Abhängigkeit der Eingangsgrößen ein Ausgangsergebnis heraus. Komparatoren können sowohl analog als auch digital ausgebildet sein, und das Ausgangsergebnis kann entweder ein Logikwert, ein Differenzwert, die größere der beiden Eingangsgrößen oder auch ein beliebiger anderer Wert sein. Zweckmäßigerweise kann jeder Empfängerspule ein Komparator nachgeschaltet sein, auf den die jeweiligen Empfängerspannungssignale gebbar sind. Diese Ausgestaltung ist einerseits denkbar, wenn jeder Empfängerspule einzeln gesonderte Auswertemittel nachgeschaltet sind, andererseits können die durch einen Multiplexer in ein serielles Signal gewandelten Empfängerspannungssignale auch wieder in Einzelsignale aufgespaltet und jeweils getrennt einem Komparator übergeben werden.

Mit besonderem Vorteil kann das Differenzspannungssignal der Empfängerspannungssignale von jeweils zwei, bevorzugt einander gegenüberliegender, Empfängerspulen auf einen Komparator gebbar sein. Beispielsweise können die Spulen entsprechend ihrem Wicklungssinn so hintereinander geschaltet sein, dass die Gesamtspannung als Differenzspannung der Empfängerspannungspulse der beiden Spulen resultiert. Auch der Vergleich eines seriellen Empfängerspannungssignals mit einem einzigen Komparator ist möglich.

Zum Vergleichen der Empfängerspannungssignale kann jedem Komparator derselbe Schwellenwert zugeordnet sein. Der Komparator benötigt neben dem Eingangssignal in Form eines Empfängerspannungssignals auch ein Referenzsignal, mit dem das Eingangssignal verglichen wird. Bei analoger Ausführung werden an einem Komparator Spannungen miteinander verglichen, daher wird neben einer Eingangsspannung auch eine Vergleichsspannung benötigt. Um den Aufbau einfach zu halten, kann daher immer derselbe Schwellenwert verwendet werden. Alternativ können die zum Vergleichen der Empfängerspannungssignale den Komparatoren zugeordneten Schwellenwerte auf unterschiedliche Werte einstellbar sein. Aufgrund von Bauelementetoleranzen kann es notwendig sein, den Schwellenwert für jedes Empfängerspannungssignal gesondert einzustellen, andererseits kann aufgrund von Betriebsspannungs- oder Temperaturänderungen auch die Anpassbarkeit der Schwellenwerte im laufenden Betrieb notwendig sein. In diesen Fällen ist die Einstellbarkeit der einzelnen Schwellenwerte so variabel wie möglich zu halten, um auf entsprechende Erfordernisse reagieren zu können.

In besonders vorteilhafter Ausgestaltung kann der Schwellenwert für das Differenzspannungssignal der Empfängerspannungssignale zweier einander gegenüberliegender Empfängerspulen vom Mittelwert der Empfängerspannungssignale abhängig sein. Durch die Verwendung des Differenzspannungssignals können beispielsweise Temperaturänderungen ausgeglichen werden, während die Abhängigkeit des Schwellenwerts vom Mittelwert der Empfängerspannungssignale Bauelementetoleranzen kompensiert.

Alternativ können die Empfängerspannungssignale von jeweils zwei, bevorzugt einander gegenüberliegender, Empfängerspulen auf einem Komparator vergleichbar sein. In diesem Fall wird keine Vergleichsspannung oder Vergleichswert benötigt, sondern die Spannungen zweier Empfängerspulen werden direkt miteinander verglichen. Dieses Vorgehen ist nur im Falle von wenigstens drei Empfängerspulen durchführbar.

Mit besonderem Vorteil kann der leitende Abschnitt in Form einer Leiterschleife realisiert sein, die einen ersten Schleifenabschnitt aufweist, der unterhalb der Geberspule liegt, und die einen zweiten Schleifenabschnitt aufweist, der in radialer Richtung näher am Rand des Drehelements angeordnet ist und unterhalb der einen oder mehreren Empfängerspulen bewegbar ist. Diese Anordnung realisiert einen doppelten Impulstransformator, wobei die Geberspule und der erste Schleifenabschnitt sowie der zweite Schleifenabschnitt und die gegebenenfalls über ihm liegende Empfängerspule oder Empfängerspulen jeweils magnetisch miteinander gekoppelt sind, und der erste und der zweite Spulenabschnitt elektrisch miteinander verbunden sind. Da das Drehelement rotieren kann, liegt oder liegen nicht immer die gleichen Empfängerspulen über dem zweiten Schleifenabschnitt, der zu diesem Zweck das Drehelement nicht in vollem Umfang bedeckt. Durch diese Anordnung kann die Modulation der Empfängerspannungssignale verstärkt werden, und die Signaldifferenz zwischen den Empfängerspannungssignalen zweier Spulen, von denen die eine über einem elektrisch leitenden Abschnitt des Drehelements und die andere über einem elektrisch nicht leitenden Abschnitt des Drehelements liegt, kann vergrößert werden.

Vorzugsweise kann wenigstens eine Spule als gedruckte Leiterplattenspule realisiert sein. Die Mehrlagen-Leiterplattentechnik ermöglicht kleine Leiterplattenspulen im Bereich bis zu einigen µH. Solche Leiterplattenspulen gewährleisten einerseits minimale Fertigungstoleranzen, andererseits ermöglichen sie eine ferritfreie Gestaltung der Spulen. Zweckmäßigerweise sind alle Spulen als gedrückte Spulen auf einem gemeinsamen Substrat ausgeführt.

Daneben betrifft die Erfindung auch ein Verfahren zur Erfassung von Umdrehungen eines sich drehenden und zumindest abschnittsweise elektrisch leitenden Drehelements mit dem Merkmalen des Anspruchs 14. Bei Verwendung einer einzigen Empfängerspule kann durch Auswertung des Empfängerspannungssignals die halbe Umdrehung des Drehelements detektiert werden. Durch das Zählen der Halbumdrehungen kann einerseits die Anzahl der Halbumdrehungen ermittelt werden, unter Berücksichtigung der Zeit zur Vollendung einer vollen Umdrehung kann aber auch die Winkelgeschwindigkeit des Drehelements oder die Strömungsgeschwindigkeit des Mediums, dessen Durchflussvolumen bestimmt werden soll, berechnet werden.

Der beim erfindungsgemäßen Verfahren verwendete Strompuls besteht ebenfalls aus einer durch einen Schwingkreis erzeugten, gedämpften Schwingung.

Vorteilhafterweise kann eine Sensoreinrichtung mit zwei Empfängerspulen verwendet werden, die vorzugsweise gleichweit von der Geberspule beabstandet und im Wesentlichen um 90° zueinander versetzt sind, und die separate Empfängerspannungssignale liefern, aus denen eine die Richtung der Drehung des Drehelements beschreibende Information bestimmt wird. Erst die Verwendung einer zweiten Spule erlaubt also die Erkennung der Drehrichtung, gleichzeitig kann aber durch die Verwendung der zweiten Spule die Winkelauflösung der Umdrehungszählung von Halbumdrehungen auf Viertelumdrehungen verbessert werden.

Vorzugsweise kann eine Sensoreinrichtung mit einer dritten Empfängerspule verwendet werden, die im Wesentlich um jeweils 90° zueinander versetzt sind und separate Empfängerspannungssignale liefern, wobei anhand eines Vergleichs oder einer Differenzbildung der Empfängerspannungssignale von zwei, bevorzugt zweier einander gegenüberliegender Empfängerspulen eine Kompensation etwaiger Empfängerspannungssignalschwankungen erfolgt. Die durch die Kombination der Empfängerspannungssignale zweier einander gegenüberliegender Spulen erreichbaren Vorteile wurden weiter oben bereits beschrieben.

Mit besonderem Vorteil kann eine Sensoreinrichtung mit einer vierten Empfängerspule verwendet werden, die im Wesentlichen um jeweils 90° zueinander versetzt sind und separate Empfängerspannungssignale liefern, wobei anhand eines Vergleichs eine Differenzbildung der Empfängerspannungssignale jeweils zweier einander gegenüberliegender Empfängerspulen eine Kompensation etwaiger Empfängerspannungssignalschwankungen erfolgt. Die vollsymmetrische Anordnung von vier Empfängerspulen um die Geberspule herum erlaubt toleranzminimal und kostenoptimal die Drehrichtungserkennung und die Störgrößenelimination. Optimalerweise arbeitet ein solches Spulenarray vorzugsweise niederohmig und induktiv, das heißt magnetisch statt elektrisch, weshalb das Verfahren durch eventuell vorhandenes Wasser sowie durch elektrische Störfelder nicht beeinträchtigt wird. Aufgrund der induktiven Kopplung der Geberspule und der Empfängerspulen und der Modulation des dadurch induzierten Empfängerspannungssignals durch das Drehelement innerhalb des zu messenden Mediums ist ein elektrisches Abtasten der Umdrehungen des Drehelements ohne direkten elektrischen Kontakt möglich, wie es bei einer kapazitiven Kopplung der Fall wäre.

Durch die gepulste Bestromung der Geberspule kann eine batteriebetriebene Durchführung des Verfahrens über Jahre hinweg gewährleistet werden, wobei die Frequenz der Bestromung von der ermittelten Drehgeschwindigkeit abhängig gemacht werden kann. Die Pulsfrequenz sollte wenigstens dem Vierfachen, insbesondere dem Sechs- bis Achtfachen der Umdrehungsfrequenz entsprechen. Da solche Anordnungen zum Erfassen der Drehzahl des Drehelements unter Umständen jahrelang still stehen, bis durch erneute Verbrauchsaufnahme das erfindungsgemäße Verfahren wieder durchgeführt wird, ist eine Anpassung der Taktfrequenz der Bestromung der Geberspule sinnvoll, um Energie einzusparen.

Mit besonderem Vorteil kann auf dem Drehelement ein erster Schleifenabschnitt angeordnet sein, der unterhalb der Geberspule liegt, und auf dem Drehelement ein zweiter Schleifenabschnitt angeordnet sein, der in Radialrichtung näher am Rand des Drehelements angeordnet ist und unterhalb der einen oder mehreren Empfängerspulen bewegt wird, wobei die Schleifenabschnitte elektrisch miteinander verbunden sind und bei Bestromung der Geberspule im ersten Schleifenabschnitt durch magnetische Kopplung ein Strompuls erzeugt wird, der im zweiten Schleifenabschnitt in einen Magnetfeldpuls umgewandelt wird, wodurch in den über der zweiten Leiterschleife liegenden Empfängerspulen die Höhe des Empfängerspannungssignals vergrößert wird. Diese Weiterbildung des Verfahrens ermöglicht eine doppelte Impulstransformation, wodurch die Signalhöhe der Empfängerspannungssignale in einem größeren Umfang variiert werden kann.

Vorteilhafterweise können die parallel anfallenden Empfängerspannungssignale auf wenigstens einen Multiplexer gegeben werden, der die Empfängerspannungssignale in ein einziges serielles Empfängerspannungssignal umwandelt.

Vorzugsweise können die Empfängerspannungssignale von jeweils zwei, bevorzugt einander gegenüberliegender, Empfängerspulen durch einen Multiplexer in ein einziges serielles Empfängerspannungssignal zusammengefasst werden.

Im Rahmen des Verfahrens kann das wenigstens eine Empfängerspannungssignal auf wenigstens eine Transistor-Schaltung gegeben werden, mit der das an diese gegebene Empfängerspannungssignal verstärkt wird.

Das wenigstens eine Empfängerspannungssignal wird auf wenigstens einen Halbwellenintegrierer mit einem Speicherkondensator zum Speichern des Spannungswerts des Empfängerspannungssignals einer Empfängerspule gegeben.

Vorzugsweise kann der Speicherkondensator über einen Entladewiderstand bis zum Erreichen einer Schwellspannung entladen werden, wobei die Entladezeit als Maß für die Höhe des aufsummierten Empfängerspannungssignals verwendet wird.

Alternativ kann das aufsummierte Empfängerspannungssignal durch einen A/D-Wandler digitalisiert werden.

Vorteilhafterweise kann das wenigstens eine Empfängerspannungssignal auf wenigstens einen Komparator gegeben werden.

In einer Ausgestaltung kann jeder Empfängerspule ein Komparator nachgeschaltet werden, auf den die jeweiligen Empfängerspannungssignale gegeben werden.

Alternativ kann das Differenzspannungssignal der Empfängerspannungssignale zweier einander gegenüberliegender Empfängerspulen auf einen Komparator gegeben werden.

Zweckmäßigerweise kann zum Vergleichen der Empfängerspannungssignale jedem Komparator derselbe Schwellenwert zugeordnet werden.

In einer Alternative können zum Vergleichen der Empfängerspannungssignale die den Komparatoren zugeordneten Schwellenwerte auf unterschiedliche Werte eingestellt werden.

Vorteilhafterweise kann der Schwellenwert für das Differenzspannungssignal der Empfängerspannungssignale zweier einander gegenüberliegender Empfängerspulen vom Mittelwert der Empfängerspannungssignale abhängen.

In einer anderen Ausgestaltung kann der Schwellenwert für das Empfängerspannungssignal einer Empfängerspule von der Höhe des Empfängerspannungssignals einer anderen Empfängerspule abhängen.

Wahlweise können auch die Empfängerspannungssignale zweier einander gegenüberliegender Empfängerspulen auf einem Komparator verglichen werden.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung einer erfindungsgemäßen Anordnung in einer ersten Ansicht,
- Fig. 2: eine Prinzipdarstellung einer erfindungsgemäßen Anordnung in einer ersten Ausführungsform,
- Fig. 3A - C: verschiedene Ausführungsformen eines Drehelements,
- Fig. 4: eine Prinzipdarstellung einer Empfängerspule mit nachgeschalteten Auswertemitteln einer ersten, nicht erfindungsgemäßen Ausführungsform,
- Fig. 5: eine Prinzipdarstellung einer Empfängerspule mit nachgeschalteten Auswertemitteln in einer zweiten, nicht erfindungsgemäßen Ausführungsform,
- Fig. 6: eine Prinzipdarstellung von zwei Empfängerspulen mit nachgeschalteten Auswertemitteln in einer dritten, nicht erfindungsgemäßen Ausführungsform,
- Fig. 7: eine Prinzipdarstellung von zwei Empfängerspulen mit nachgeschalteten Auswertemitteln in einer vierten, nicht erfindungsgemäßen Ausführungsform,
- Fig.8: eine Prinzipsdarstellung von zwei Empfängerspulen mit nachgeschalteten Auswertemitteln in einer fünften, nicht erfindungsgemäßen Ausführungsform,
- Fig. 9: eine Prinzipdarstellung einer Empfängerspule mit nachgeschalteten Auswertemitteln in einer sechsten, nicht erfindungsgemäßen Ausführungsform,
- Fig. 10: eine Prinzipdarstellung von zwei Empfängerspulen mit nachgeschalteten Auswertemitteln in einer siebten, nicht erfindungsgemäßen Ausführungsform,
- Fig. 11: eine Prinzipdarstellung von zwei Empfängerspulen mit nachgeschalteten Auswertemitteln in einer achten, nicht erfindungsgemäßen Ausführungsform,
- Fig. 12: eine Prinzipdarstellung der Mittel zum Beaufschlagen der Geberspule,
- Fig. 13: eine Prinzipdarstellung des Spannungsverlaufs einer gedämpften Schwingung,
- Fig. 14: eine Prinzipdarstellung eines Halbwellenintegrierers,
- Fig. 15: das Schaltsymbol einer Diode,
- Fig. 16: den Signalverlauf eines Empfängerspannungssignals, und
- Fig. 17: eine Prinzipdarstellung von zwei Empfängerspulen mit nachgeschalteten Auswertemitteln in einer neunten, erfindungsgemäßen Ausführungsform.

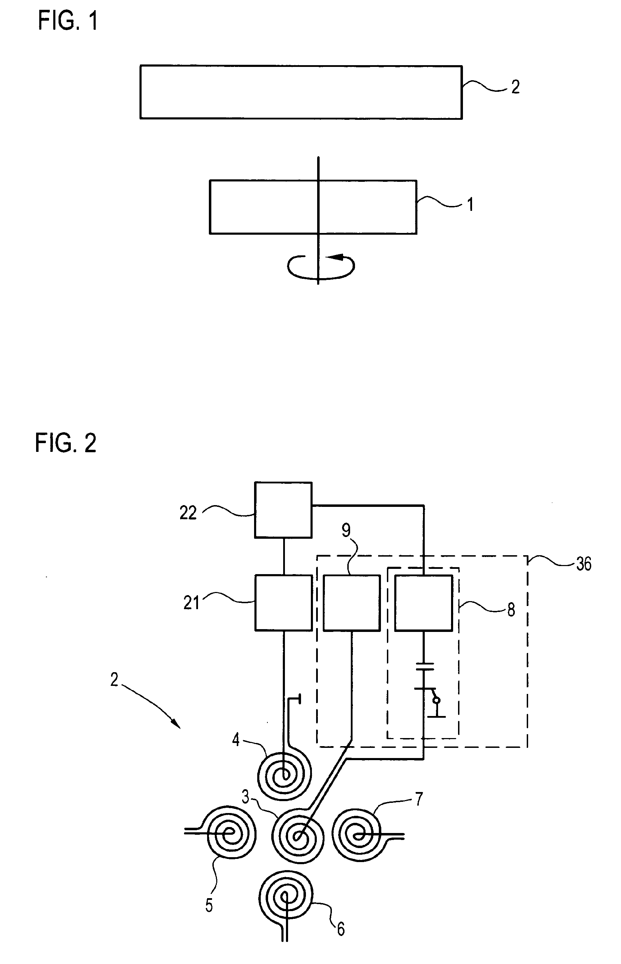

Fig. 1 zeigt die erfindungsgemäße Anordnung des Drehelements 1 zur Sensoreinrichtung 2. Nicht dargestellt ist die Leitung des Mediums sowie das Medium, dessen Verbrauch durch das Drehelement 1 und die Sensoreinrichtung 2 erfasst werden soll. Das Drehelement 1 hat eine Zylinder- oder Scheibenform, wobei Fig. 1 den Querschnitt des Zylinders oder der Scheibe zeigt, während die Sensoreinrichtung 2 nur schematisch dargestellt ist. Nicht dargestellt sind die Vorrichtungen des Drehelements 1, die die Drehung bewirken. Diese sind insbesondere in Form eines Flügelrads dem Fachmann bekannt. Die Scheibe oder der Zylinder, also das Drehelement 1, sitzt auf z. B. dem Flügelrad und wird so gedreht.

Die Anordnung der Vorrichtungen der Sensoreinrichtung 2 kann Fig. 2 entnommen werden. Das aus den Spulen gebildete Spulenarray ist derart angeordnet, dass die zentral angeordnete Geberspule 3 von den vier Empfängerspulen 4, 5, 6 und 7 symmetrisch und um 90° jeweils versetzt umgeben ist. Den Empfängerspulen 4, 5, 6 und 7 sind jeweils Auswertemittel 21 nachgeschaltet. Die Auswertemittel 21 sind allerdings nur für Empfängerspule 4 explizit eingezeichnet. Die Geberspule 3 ist an Bestromungsmittel 8 und einer Versorgungsspannung 9 angeschlossen, während die Bestromungsmittel 8 und die Auswertemittel 21 jeweils wieder mit einer Steuerungseinheit 22 verbunden sind. Während bei den Auswertemitteln 21 unterschiedlichste Ausgestaltungen realisiert werden können, sind die der Geberspule nachgeschalteten Mittel 36, die aus Bestromungsmittel 8 und Versorgungsspannung 9 bestehen, stets vorzusehen.

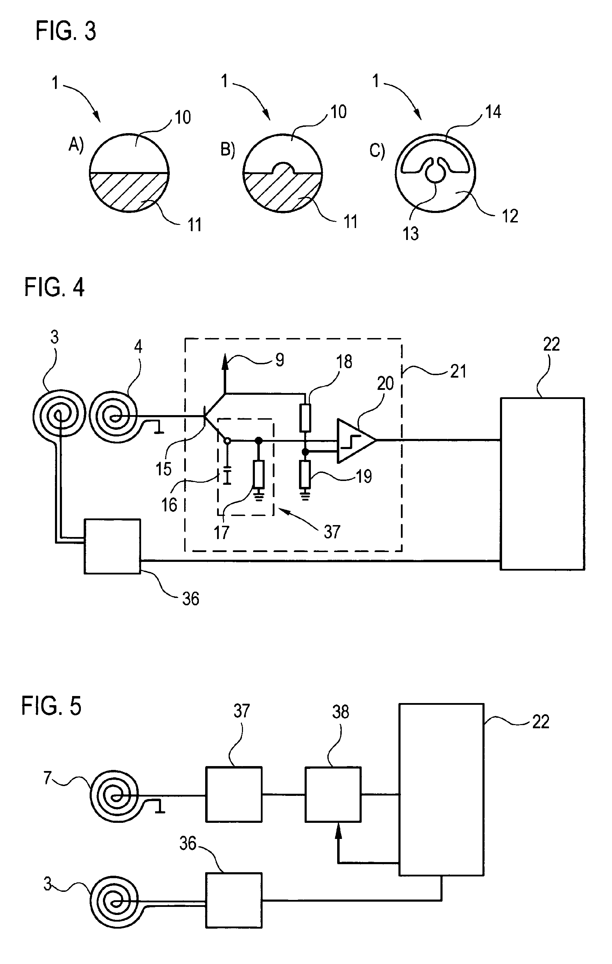

Fig. 3A - C zeigen verschiedene Variationsmöglichkeiten des Drehelements 1, wobei jeweils ein elektrisch leitender Abschnitt 11 und ein elektrisch nicht leitender Abschnitt 10 gegeben sind. In Fig. 3A ist ein halbkreisförmiger leitender Abschnitt 11 gezeigt, in Fig. 3B weist der halbkreisförmige Abschnitt 11 zusätzlich einen halbkreisförmigen Abschnitt auf, so dass die darüber befindliche Geberspule komplett belegt ist. Im elektrisch leitendem Abschnitt 11 werden durch den magnetischen Feldpuls Kurzschlussströme induziert, die ein Gegenfeld erzeugen, durch das die Summe aus Geberfeld und Gegenfeld nach oben und zur Seite verdrängt werden, wodurch sich die Kopplung zwischen Geber- und Empfängerspule ebenfalls drehwinkelabhängig verändert. Ein solches teilflächig leitendes Drehelement 1 ist leicht zu fertigen und daher kostengünstig. Eine Ausführungsform, die eine doppelte Impulstransformation ermöglicht, zeigt Fig. 3C. Die erste Schleife 13 und die zweite Schleife 14 der Schleifenanordnung 12 sind elektrisch miteinander verbunden, wobei über der ersten Schleife 13 die Geberspule 3 angeordnet ist und über der zweiten Schleife 14 sich eine oder mehrere der Empfängerspulen 4, 5, 6 und 7 befinden. Durch die linienförmige Ausgestaltung der zweiten Schleife 14 und ihre Begrenzung auf den halben Umfang des Drehelements 1 liegen immer zwei Empfängerspulen über der zweiten Schleife 14. Da das Drehelement 1 rotiert, liegen jeweils andere Empfängerspulen 4, 5, 6 oder 7 über dem zweiten Abschnitt 14 während der Durchführung des Verfahrens. Dabei kann die Fläche über der zweiten Schleife 14 als elektrisch leitender Abschnitt 11 aufgefasst werden, während die nicht von der Schleifenanordnung 12 bedeckte Fläche als elektrisch nicht leitender Abschnitt 10 ausgebildet ist. Bei Bestromung der Geberspule wird in der ersten Schleife 13 durch magnetische Kopplung ein Strompuls erzeugt, der in der zweiten Schleife 14 in einen Magnetfeldpuls umgewandelt wird, wodurch in den über der zweiten Schleife 14 liegenden Empfängerspulen die Höhe des Empfängerspannungssignals vergrößert wird, was einer doppelten Impulstransformation gleichzusetzen ist. Alternativ kann auch nur die zweite Schleife 14 vorgesehen sein, die insbesondere halbkreisförmig ausgebildet sein kann und das Feld der Geberspule durch in ihr induzierte Kreisströme verdrängt. Je nach Geometrie von Spulen und Drehelement erhöht oder erniedrigt die zweite Schleife 14 dadurch bei über ihr liegenden Empfängerspulen den empfangenen Spannungspuls.

Die Fig. 4 bis 11 zeigen nicht zur Erfindung gehörige Ausführungsformen, die zu deren Erläuterung jedoch nützlich sind.

Fig. 4 zeigt die Empfängerspule 4 mit nachgeordneten Auswertemitteln 21 in einer ersten, nicht zur Erfindung gehörigen Ausführungsform. Das Empfängerspannungssignal der Empfängerspule 4 wird dabei auf eine Transistor-Schaltung 15 gegeben, wodurch das Empfängerspannungssignal verstärkt wird. An diese schließt sich ein Maximumsdetektor 37 mit einem Speicherkondensator 16 und einem Entladewiderstand 17 an, wodurch der Maximalwert des Empfängerspannungssignals ermittelt werden kann. Dieser Maximalwert wird dann an einem Komparator 20 mit einem Schwellenwert verglichen, wobei noch die Widerstände 18 und 19 als Spannungsteiler der Versorgungsspannung 9 benötigt werden, damit die am Komparator anliegenden Vergleichsspannung in jedem Fall kleiner ist als die am Speicherkondensator 16 vorhandene Ladespannung. Da der Maximalwert nicht digitalisiert wurde, erfolgt am Komparator 20 ein analoger Vergleich mit einer Versorgungsspannung 9. Das vom Komparator zurückgelieferte Ausgangssignal wird dann an die Steuerungseinheit 22 weitergegeben.

Eine alternative, nicht zur Erfindung gehörende Art der Signalverarbeitung nach dem Maximumsdetektor 37 zeigt Fig. 5. Nachdem das Empfängerspannungssignal der Empfängerspule 7 auf den Maximumsdetektor 37 gegeben wurde, wird es durch den A/D-Wandler 38 digitalisiert und dann an die Steuerungseinheit 22 weitergegeben.

In den nicht zur Erfindung gehörenden Ausführungsbeispielen der Fig. 4 und 5 ist neben der Geberspule 3 jeweils nur eine Spule 4 bzw. 7 mit entsprechenden Auswertemitteln 21 abgebildet, allerdings können entsprechend auch zwei, drei oder auch vier Empfängerspulen verwendet werden, die dann jeweils entsprechende Auswertemittel 21 aufweisen.

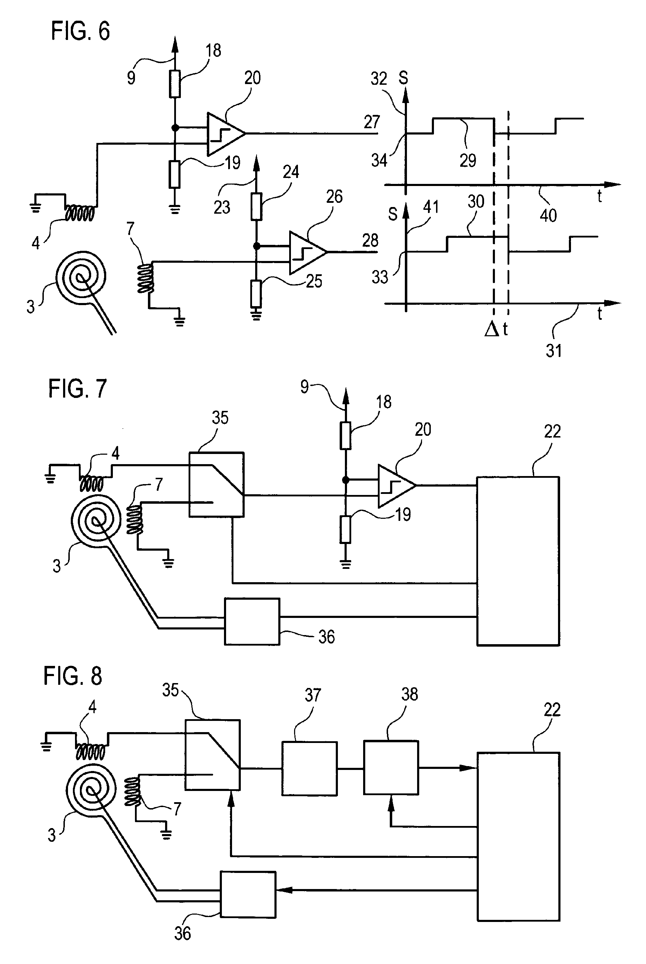

Die Verwendung von wenigstens zwei Empfängerspulen 4 und 7 erlaubt auch die Bestimmung der Drehrichtung des Drehelements 1, was in der eine nicht zur Erfindung gehörende Ausführungsform zeigenden Fig. 6 dargestellt ist. Zur Verarbeitung des Empfängerspannungssignals der Empfängerspule 4 ist der Spule ein Komparator 20 mit Widerständen 18 und 19 nachgeschaltet, während zur Auswertung des Empfängerspannungssignals der Empfängerspule 7 die Versorgungsspannung 23, die Widerstände 24 und 25 sowie der Komparator 26 vorhanden ist. Die Komparatoren 20 und 26 geben jeweils Signale 27 und 28 aus, deren zeitlicher Verlauf durch die Kurven 29 und 30 dargestellt ist. Auf den x-Achsen 31 und 40 ist die Zeit angegeben, während auf den y-Achsen 32 und 41 die vom jeweiligen Komparator ausgegebene Signal intensität als Kurve 29 bzw. 30 dargestellt ist. Die Achsenabschnitte 33 und 34 geben die jeweiligen Ausgangswerte der Kurven 29 und 30 an. Wie man erkennt, ändert sich der durch Kurve 29 dargestellte Wert des Empfängerspannungssignals der Empfängerspule 4 früher vom als Achsenabschnitt 34 bezeichneten Wert als der Wert der Kurve 30 und kehrt auch früher wieder zu diesem Wert zurück. Die Zeitdifferenz zwischen den Kurven ist als Δt Δt eingezeichnet. Aus der Zeitdauer, die vergeht, bis Kurve 29 wieder ungefähr den Wert des Achsenabschnitts 34 erreicht hat kann die Winkelgeschwindigkeit des Drehelements 1 berechnet werden, und aus der Lage der Änderungen der Kurve 29 und 30 zueinander kann die Drehrichtung ermittelt werden.

Um den Aufwand an Auswertemitteln 21 möglichst gering zu halten, kann wie in der nicht zur Erfindung gehörenden Ausführungsform der Fig. 7 abgebildet, die Verwendung eines Multiplexers 35 vorgesehen sein. Die Empfängerspannungssignale der Empfängerspulen 4 und 7 werden durch den Multiplexer 35 in ein serielles Empfängerspannungssignal umgewandelt, das auf den Komparator 20 gegeben wird. Dabei kann der Komparator 20 mit unterschiedlichen Versorgungsspannungen 9 beaufschlagt werden, um jedem Empfängerspannungssignal einen eigenen Vergleichswert zuzuordnen. Sofern es möglich ist, wird aber die gleiche Versorgungsspannung 9 angelegt und damit auch derselbe Schwellenwert für alle Empfängerspannungssignale verwendet. Das Ausgangssignal des Komparators 20 wird auf die Steuerungseinheit 22 gegeben, die ihrerseits wieder den Multiplexer 35 kontrolliert.

Alternativ kann, wie in der nicht zur Erfindung gehörenden Ausführungsform der Fig. 8 dargestellt, dem Multiplexer 35 auch ein Maximumsdetektor 37 nachgeschaltet sein, an den sich ein A/D-Wandler 38 anschließt. Dieses digitalisierte, serielle Empfängerspannungssignal der Empfängerspulen 4 und 7 wird auf die Steuerungseinrichtung 22 gegeben, die aufgrund der eingegangenen Signale den A/D-Wandler 37, den Multiplexer 35 und die Mittel 36 steuert.

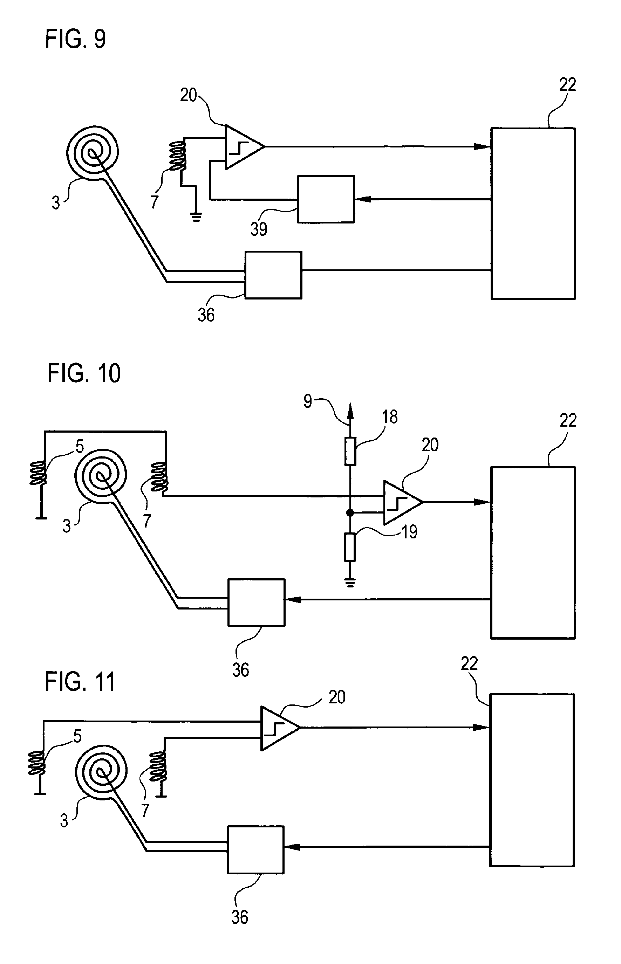

Eine Möglichkeit zur Regelung des Schwellenwerts an einem Komparator aufgrund von Betriebs- oder Temperaturschwankungen zeigt die nicht zur Erfindung gehörende Ausführungsform der Fig. 9. Das Empfängerspannungssignal der Empfängerspule 7 wird am Komparator 20 mit einem Wert verglichen, der durch die Steuerungseinrichtung 22 vorgegeben wird. Das Signal der Steuerungseinrichtung 22 wird durch einen D/A-Wandler 39 in ein analoges Signal umgewandelt, wobei das Signal und damit die Höhe der am Komparator 20 angelegten Vergleichsspannung durch die Steuerungseinrichtung 22 frei wählbar ist.

Eine Möglichkeit zur Kombination der Empfängerspannungssignale zweier einander gegenüber liegender Empfängerspulen 5 und 7 zeigt die nicht zur Erfindung gehörende Ausführungsform der Fig. 10. Dabei sind die Spulen entsprechend ihrer Windungsrichtung derart hintereinandergeschaltet, dass am Komparator 20 das Differenzspannungssignal der beiden Empfängerspulen 5 und 7 anliegt. In der Folge wird dann nur noch das Vorzeichen des Differenzspannungssignals ausgewertet. Zur Vereinfachung sind hier nur zwei Spulen dargestellt, die gleiche Anordnung mit zwei um 90° versetzten Empfängerspulen 4 und 6 mit entsprechenden Auswertemitteln 21 ist weiterhin nötig zur Drehrichtungserkennung. Durch die Verwendung der Differenzspannung können Schwankungen im Empfängerspannungssignal, die durch Temperaturänderungen oder ähnliches hervorgerufen werden, eliminiert werden. Durch die Verwendung gemeinsamer Auswertemittel, die auch Verstärker und Maximalwertdetektor umfassen können, fallen alle Offset- und Driftfehler dieser Schaltungselemente aus der Auswertung heraus.

Wie in der nicht zur Erfindung gehörenden Ausführungsform der Fig. 11 dargestellt ist, können alternativ die Empfängerspannungssignale der Empfängerspulen 5 und 7 auch jeweils auf einen Eingang des Komparators 20 gelegt werden, wobei dann die Empfängerspannungssignale der Empfängerspulen 5 und 7 direkt miteinander verglichen werden. Hierdurch wird die Abhängigkeit von absoluten Pulshöhen automatisch eliminiert. Das Vorzeichen des Differenzspannungssignals entscheidet dann darüber, welche der beiden einander gegenüberliegenden Empfängerspulen aufgrund der Modulation durch das Drehelement einen größeren Spannungspuls erhält. Der Komparator 20 kann dabei als Ausgabewert ein Logiksignal zurückliefern, das beispielsweise als Wert 1 dafür steht, dass das Empfängerspannungssignal der Empfängerspule 5 größer ist als das der Empfängerspule 7, während im umgekehrten Fall eine 0 zurückgeliefert wird.

Die Anzahl der verwendeten Spulen ist nicht auf die in den Figuren gezeigte Spulenzahl beschränkt, vielmehr wird optimalerweise von vier Empfängerspulen ausgegangen. Nur der Übersichtlichkeit halber wurde die in den Figuren dargestellte Spulenzahl sowie der daran nachgeschalteten Auswertemittel reduziert.

Insgesamt gesehen bleibt festzuhalten, dass die Anzahl der einzelnen Auswertemitteln von dem Vorhandensein eines Multiplexers und auch von der Schaltung der Empfängerspulen abhängt. Wird ein analoger Multiplexer zum Zusammenfassen aller Empfängerspannungssignale verwendet, fallen alle Offset- und Driftfehler der nachgeschalteten Auswertemittel wie Verstärker, Maximalwertdetektor und Komparator aus der Drehungserfassung heraus. Diese Auswertemittel werden dementsprechend auch nur einmal benötigt. Die Digitalisierung des Signals kann bereits nach dem Maximumsdetektor erfolgen, es kann aber auch vorgesehen sein, dass auf den einen Maximumsdetektor nachgeschalteten Komparator noch ein analoges Signal gegeben wird, das erst nach dem Komparator digitalisiert wird.

Zur Ermittlung der Drehrichtung sowie von Viertelumdrehungszählimpulsen kann bei wenigstens zwei Empfängerspulen die übliche Quadraturlogik verwendet werden. Werden mehr als zwei Spulen verwendet, werden die Signale zweier einander gegenüberliegender Spulen zu einem Logiksignal zusammengefasst, um dann wieder mit der üblichen Quadraturlogik die Berechnung durchzuführen.

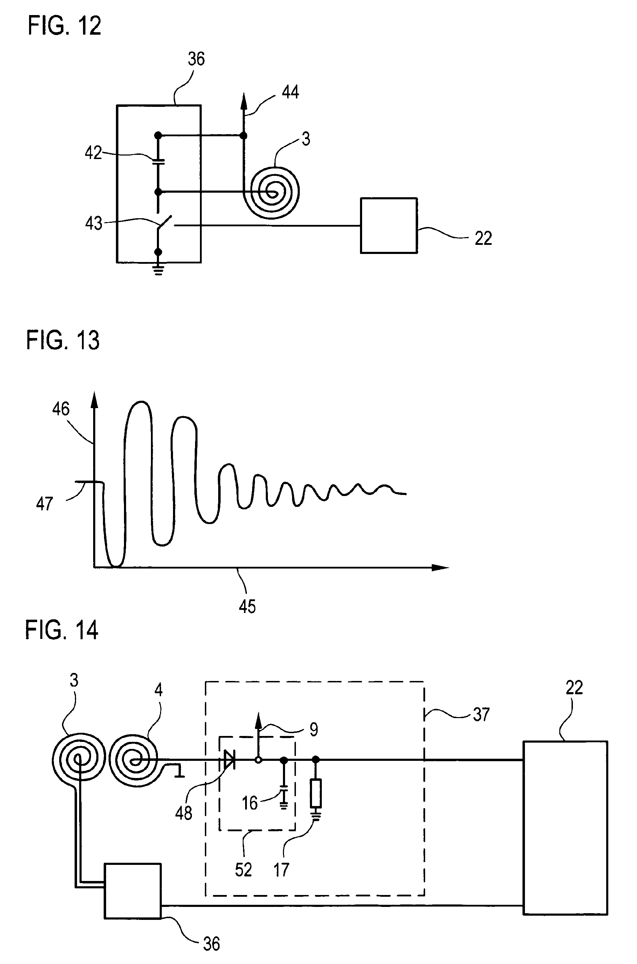

Fig. 12 zeigt eine Ausgestaltung der Mittel 36 zum Beaufschlagen der Geberspule, mit der eine Beaufschlagung in Form von gedämpften Schwingungen möglich ist. Hierzu sind neben der Versorgungsspannung 44 ein Kondensator 42 und ein Schalter 43 vorgesehen. Die Mittel 36 werden über die Steuerungseinheit 22 angesteuert. Der Vorteil dieser Ausgestaltung der Mittel 36 besteht darin, dass nur die Anregungsenergie für einen einzigen Impuls der Batterie entnommen wird, aber das resultierende induzierte Empfängerspannungssignal aus vielen Impulsen des gedämpft abklingenden Schwingkreises besteht.

Der Spannungsverlauf der Impulserzeugung gemäß dieser Ausgestaltung der Mittel 36 ist in Fig. 13 dargestellt. Auf der Achse 45 ist die Zeit t aufgetragen, während die Achse 46 ein Maß für die Spannung U darstellt. Die Kurve des Spannungsverlaufs beginnt mit dem Wert 47 der Versorgungsspannung, wobei die Amplitude im Zeitverlauf abklingt.

Wird die Geberspule mit einem Wechselspannungsburst oder einer gedämpften Schwingung beaufschlagt, ist dies auch bei den Auswertemitteln 21 zu berücksichtigen. Zur Verstärkung des Signals wird in diesem Fall ein Integrierer für unipolare Signalteile verwendet. Dementsprechend zeigt Fig. 14 eine Schaltung, die einen Halbwellenintegrierer 52 mit einem Speicherkondensator 16 und einer Diode 48 umfasst. Aufgrund der Gleichrichterfunktion der Diode wird nur eine Halbwelle des Empfängerspannungssignals durchgelassen, also jeweils die positiven oder negativen Halbperioden. Diese unipolaren Halbperioden werden vom Speicherkondensator 16 aufaddiert. Der Entladewiderstand 17 entlädt gleichzeitig den Kondensator 16, wodurch das Empfängerspannungssignal zwischen zwei Wechselspannungsbursts oder gedämpften Schwingungen langsam wieder auf Null abfällt. Durch die Addition der Halbwellen ergibt sich insgesamt ein größeres Nutzsignal.

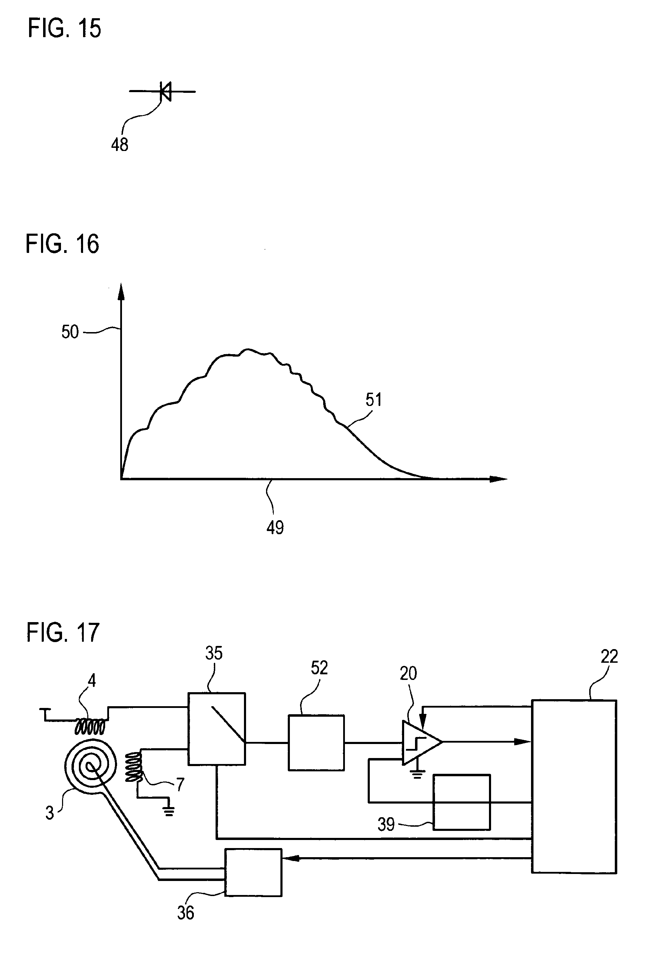

Fig. 15 zeigt eine alternative Ausgestaltung der Anordnung der Diode 48, wobei je nach Ausgestaltung der Diode 48 gemäß Fig. 14 oder gemäß Fig. 15 dann jeweils die positiven oder die negativen Halbwellen durchgelassen werden.

Der Zeitverlauf des noch nicht aufsummierten Empfängerspannungssignals des Halbwellenintegrierers 52 ist in Fig. 16 dargestellt. Die Achse 49 repräsentiert die Zeit t und die Achse 50 das Empfängerspannungssignal. Die Kurve 51 zeigt somit den zeitlichen Verlauf des Empfängerspannungssignals.

Fig. 17 zeigt eine Prinzipdarstellung von zwei Empfängerspulen mit nachgeschalteten Auswertemitteln, wobei die Geberspule 3 mit einem Wechselspannungsburst oder einer gedämpften Schwingung periodisch beaufschlagt wird. Der Multiplexer 35 wandelt die Empfängerspannungssignale der Empfängerspulen 4 und 7 in ein einziges serielles Empfängerspannungssignal um. Dieses wird auf den Halbwellenintegrierer 52 gegeben. Im Halbwellenintegrierer 52 wird das serielle Empfängerspannungssignal unipolar aufaddiert, wobei die Empfängerspannungssignale der einzelnen Empfängerspulen getrennt aufaddiert werden. Danach wird das Empfängerspannungssignal auf einen Komparator 20 gegeben. Die Funktion der weiteren Komponenten erfolgt wie zu den vorherigen Figuren beschrieben.

## Patentansprüche

1. Anordnung zum Erfassen einer Drehung eines Drehelements (1), umfassend:
- einen auf einer im Wesentlichen planen Fläche des Drehelements (1) vorgesehenen elektrisch leitenden Abschnitt (11),
- eine feststehende Sensoreinrichtung (2) mit wenigstens einer Geberspule (3) und wenigstens einer Empfängerspule (4, 5, 6, 7), die beide im Wesentlichen koplanar und flächig nebeneinander angeordnet sind, und die bei Bestromung der Geberspule (3) über ein hierdurch erzeugtes Magnetfeld derart gekoppelt sind, dass in der Empfängerspule (4, 5, 6, 7) ein Empfängerspannungssignal induziert wird, wobei das induzierte Empfängerspannungssignal in Abhängigkeit der Drehstellung des Drehelements (1) moduliert ist
- Mittel (36) zum Beaufschlagen der Geberspule (3) mit Strompulsen zur Erzeugung gepulster Magnetfelder und daraus resultierend gepulster Empfängerspannungssignale, und
- Auswertemittel (21) zum Abgreifen der Empfängerspannungssignale und zum Auswerten derselben zur Drehungserfassung,
wobei die Mittel (36) so ausgebildet sind, dass ein Strompuls aus einer durch einen Schwingkreis erzeugten, gedämpften Schwingung besteht, und die Auswertemittel (21) wenigstens einen Halbwellenintegrierer (52) mit einem Speicherkondensator (16) und einer Diode (48) umfassen.

2. Anordnung nach Anspruch 1, **dadurch gekennzeichnet, dass** die Sensoreinrichtung (2) zwei, drei oder vier im Wesentlichen koplanar und flächig angeordnete Empfängerspulen (4, 5, 6, 7) aufweist, die im Wesentlichen um 90° versetzt zueinander angeordnet sind.

3. Anordnung nach Anspruch 2, **dadurch gekennzeichnet, dass** die Auswertemittel wenigstens einen Multiplexer (35) umfassen, wobei der wenigstens eine Multiplexer (35) die parallel anfallenden Empfängerspannungssignale der Empfängerspulen durch wiederholte Strompulsanregung der Geberspule in ein einziges serielles Empfängerspannungssignal umwandelt.

4. Anordnung nach Anspruch 3, **dadurch gekennzeichnet, dass** die Empfängerspannungssignale von jeweils zwei, bevorzugt einander gegenüberliegender, Empfängerspulen (4, 5, 6, 7) durch einen Multiplexer (35) in ein einziges serielles Empfängerspannungssignal zusammenfassbar sind.

5. Anordnung nach einem der vorhergehenden Ansprüche, **dadurch gekennzeichnet, dass** die Auswertemittel (21) wenigstens eine Transistor-Schaltung (15) umfassen, mit der das an diese gegebene Empfängerspannungssignal verstärkbar ist.

6. Anordnung nach einem der vorangehenden Ansprüche, **dadurch gekennzeichnet, dass** die Auswertemittel (21) einen Entladewiderstand (17) zum Entladen des Speicherkondensators (16) bis zum Erreichen einer Schwellenspannung umfassen, wobei die Entladezeit als Maß für die Höhe des aufsummierten Empfängerspannungssignals dient.

7. Anordnung nach einem der vorangehenden Ansprüche, **dadurch gekennzeichnet, dass** die Auswertemittel wenigstens einen Komparator (20, 26) umfassen und das Differenzspannungssignal der Empfängerspannungssignale von jeweils zwei, bevorzugt einander gegenüberliegender, Empfängerspulen (4, 5, 6, 7) auf einen Komparator (20, 26) gebbar ist.

8. Anordnung nach Anspruch 7, **dadurch gekennzeichnet, dass** zum Vergleichen der Empfängerspannungssignale die den Komparatoren (20, 26) zugeordneten Schwellenwerte auf unterschiedliche Werte einstellbar sind.

9. Anordnung nach den Ansprüchen 7 und 8, **dadurch gekennzeichnet, dass** der Schwellenwert für das Differenzspannungssignal der Empfängerspannungssignale zweier einander gegenüberliegender Empfängerspulen (4, 5, 6, 7) vom Mittelwert der Empfängerspannungssignale abhängig ist.

10. Anordnung nach Anspruch 8, **dadurch gekennzeichnet, dass** der Schwellenwert für das Empfängerspannungssignal einer Empfängerspule (4, 5, 6, 7) von der Höhe des Empfängerspannungssignals einer anderen Empfängerspule (4, 5, 6, 7) abhängig ist.

11. Anordnung nach Anspruch 7, **dadurch gekennzeichnet, dass** die Empfängerspannungssignale von jeweils zwei, bevorzugt einander gegenüberliegender, Empfängerspulen (4, 5, 6, 7) auf einem Komparator (20, 26) vergleichbar sind.

12. Anordnung nach einem der vorangehenden Ansprüche, **dadurch gekennzeichnet, dass** der leitende Abschnitt (11) in Form einer Leiterschleife realisiert ist, die einen ersten Schleifenabschnitt (13) aufweist, der unterhalb der Geberspule (3) liegt, und die einen zweiten Schleifenabschnitt (14) aufweist, der in Radialrichtung näher am Rand des Drehelements (1) angeordnet ist und unterhalb der einen oder mehreren Empfängerspulen (4, 5, 6, 7) bewegbar ist.

13. Anordnung nach einem der vorhergehenden Ansprüche, **dadurch gekennzeichnet, dass** wenigstens eine Spule (3, 4, 5, 6, 7) als gedruckte Leiterplattenspule realisiert ist.

14. Verfahren zur Erfassung von Umdrehungen eines sich drehenden und zumindest abschnittsweise elektrisch leitenden Drehelements mittels einer Sensoreinrichtung umfassend wenigstens eine Geberspule, wenigstens eine Empfängerspule, Mittel zur gepulsten Bestromung der Geberspule und Auswertemittel, wobei die Spulen flächig ausgebildet sind und koplanar nebeneinander liegen, die in wenigstens einer Geberspule bei Bestromung ein gepulstes Magnetfeld erzeugt, durch das die Geberspule und die wenigstens eine Empfängerspule induktiv gekoppelt werden und durch das in der wenigstens einen Empfängerspule ein in Abhängigkeit der Drehstellung des Drehelements moduliertes, gepulstes Empfängerspannungssignal erzeugt wird, das durch die Auswertemittel ausgewertet wird, wobei die Geberspule mit durch einen Schwingkreis erzeugten Strompulsen bestehend aus gedämpften Schwingungen bestromt wird und wobei das wenigstens eine Empfängerspannungssignal auf wenigstens einen Halbwellenintegrierer mit einem Speicherkondensator zum Speichern des Spannungswerts des Empfängerspulensignals einer Empfängerspule gegeben wird.

## Claims

1. Arrangement for detecting a rotation of a rotary element (1), comprising:
- an electrically conductive section (11) provided on a substantially planar surface of the rotary element (1),
- a fixed sensor device (2) having at least one transmitter coil (3) and at least one receiver coil (4, 5, 6, 7), which are both arranged next to one another in a substantially coplanar and flat manner and, when the transmitter coil (3) is energized, are coupled via a magnetic field generated by said energization such that a receiver voltage signal is induced in the receiver coils (4, 5, 6, 7), wherein the induced receiver voltage signal is modulated as a function of the rotary position of the rotary element (1),
- means (36) for applying current pulses to the transmitter coil (3) to generate pulsed magnetic fields and pulsed receiver voltage signals resulting therefrom, and
- evaluation means (21) for tapping the receiver voltage signals and for evaluating same to detect the rotation,
wherein the means (36) are designed such that a current pulse consists of damped oscillation generated by a resonant circuit, and the evaluation means (21) comprise at least one half-wave integrator (52) with a storage capacitor (16) and a diode (48).

2. Arrangement according to Claim 1, **characterized in that** the sensor device (2) has two, three or four receiver coils (4, 5, 6, 7) which are arranged in a substantially coplanar and flat manner and are arranged substantially offset by 90° with respect to one another.

3. Arrangement according to Claim 2, **characterized in that** the evaluation means comprise at least one multiplexer (35), wherein the at least one multiplexer (35) converts the receiver voltage signals of the receiver coils, which receiver voltage signals arise in parallel, into a single serial receiver voltage signal owing to repeated current pulse excitation of the transmitter coil.

4. Arrangement according to Claim 3, **characterized in that** the receiver voltage signals from in each case two receiver coils (4, 5, 6, 7), which preferably lie opposite one another, can be combined into a single serial receiver voltage signal by a multiplexer (35).

5. Arrangement according to any of the preceding claims, **characterized in that** the evaluation means (21) comprise at least one transistor circuit (15) by means of which the receiver voltage signal given thereto can be amplified.

6. Arrangement according to any of the preceding claims, **characterized in that** the evaluation means (21) comprise a discharge resistor (17) for discharging the storage capacitor (16) until a threshold voltage is reached, wherein the discharge time is used as a measure for the level of the added receiver voltage signal.

7. Arrangement according to any of the preceding claims, **characterized in that** the evaluation means comprise at least one comparator (20, 26) and the difference voltage signal of the receiver voltage signals of in each case two receiver coils (4, 5, 6, 7), which preferably lie opposite one another, can be given to a comparator (20, 26).

8. Arrangement according to Claim 7, **characterized in that**, in order to compare the receiver voltage signals, the threshold values assigned to the comparators (20, 26) can be set to different values.

9. Arrangement according to Claims 7 and 8, **characterized in that** the threshold value for the difference voltage signal of the receiver voltage signals of two receiver coils (4, 5, 6, 7) which lie opposite one another is dependent on the average value of the receiver voltage signals.

10. Arrangement according to Claim 8, **characterized in that** the threshold value for the receiver voltage signal of one receiver coil (4, 5, 6, 7) is dependent on the level of the receiver voltage signal of another receiver coil (4, 5, 6, 7).

11. Arrangement according to Claim 7, **characterized in that** the receiver voltage signals of respectively two receiver coils (4, 5, 6, 7), which preferably lie opposite one another, can be compared on a comparator (20, 26).

12. Arrangement according to any of the preceding claims, **characterized in that** the conductive section (11) is realized in the form of a conductor loop having a first loop section (13) which lies below the transmitter coil (3) and having a second loop section (14) which is arranged closer to the edge of the rotary element (1) in the radial direction and below which one or more receiver coils (4, 5, 6, 7) can be moved.

13. Arrangement according to any of the preceding claims, **characterized in that** at least one coil (3, 4, 5, 6, 7) is realized as a printed circuit board coil.

14. Method for detecting rotations of a rotating rotary element, which is electrically conductive at least in sections, by means of a sensor device comprising at least one transmitter coil, at least one receiver coil, means for pulsed energization of the transmitter coil and evaluation means, wherein the coils are designed to be flat and lie next to one another in a coplanar manner, which means for pulsed energization generate a pulsed magnetic field in at least one transmitter coil during energization, said pulsed magnetic field causing the transmitter coil and the at least one receiver coil to be inductively coupled and causing a pulsed receiver voltage signal which is modulated as a function of the rotary position of the rotary element to be generated in the at least one receiver coil, said pulsed receiver voltage signal being evaluated by the evaluation means, wherein the transmitter coil is energized with damped oscillations consisting of current pulses generated by a resonant circuit and wherein the at least one receiver voltage signal is given to at least one half-wave integrator having a storage capacitor for storage of the voltage value of the receiver coil signal of a receiver coil.

## Revendications

1. Arrangement pour détecter une rotation d'un élément rotatif (1), comprenant :
- une portion (11) électriquement conductrice prévue sur une surface essentiellement plane de l'élément rotatif (1),
- un dispositif de détection (2) fixe comprenant au moins une bobine de codeur (3) et au moins une bobine réceptrice (4, 5, 6, 7), les deux étant pour l'essentiel disposées dans le même plan et à plat l'une à côté de l'autre, et lesquelles, lors de l'alimentation électrique de la bobine de codeur (3), sont couplées par un champ magnétique ainsi généré de telle sorte qu'un signal de tension de récepteur est induit dans la bobine réceptrice (4, 5, 6, 7), le signal de tension de récepteur induit étant modulé en fonction de la position de rotation de l'élément rotatif (1),
- des moyens (36) pour charger la bobine de codeur (3) avec des impulsions de courant en vue de générer des champs magnétiques pulsés et des signaux de tension de récepteur pulsés qui en résultent, et
- des moyens d'interprétation (21) pour prélever les signaux de tension de récepteur et pour interpréter ceux-ci en vue de détecter la rotation,
les moyens (36) étant configurés de telle sorte qu'une impulsion de courant se compose d'une oscillation amortie générée par un circuit oscillant et que les moyens d'interprétation (21) comprennent au moins un intégrateur de demi-onde (52) muni d'un condensateur d'accumulation (16) et d'une diode (48).

2. Arrangement selon la revendication 1, **caractérisé en ce que** le dispositif de détection (2) présente deux, trois ou quatre bobines réceptrices (4, 5, 6, 7) disposées pour l'essentiel dans le même plan et à plat, lesquelles sont disposées en étant décalées pour l'essentiel de 90° les unes par rapport aux autres.

3. Arrangement selon la revendication 2, **caractérisé en ce que** les moyens d'interprétation comprennent au moins un multiplexeur (35), l'au moins un multiplexeur (35) convertissant les signaux de tension de récepteur produits en parallèle des bobines réceptrices en un signal de tension de récepteur série unique par une excitation répétée par impulsion de courant de la bobine de codeur.

4. Arrangement selon la revendication 3, **caractérisé en ce que** les signaux de tension de récepteur de deux bobines réceptrices (4, 5, 6, 7) respectives, de préférence opposées l'une à l'autre, peuvent être regroupés par un multiplexeur (35) en un signal de tension de récepteur série unique.

5. Arrangement selon l'une des revendications précédentes, **caractérisé en ce que** les moyens d'interprétation (21) comprennent au moins un circuit à transistor (15) avec lequel peut être amplifié le signal de tension de récepteur qui leur est délivré.

6. Arrangement selon l'une des revendications précédentes, **caractérisé en ce que** les moyens d'interprétation (21) comprennent une résistance de décharge (17) pour décharger le condensateur d'accumulation (16) jusqu'à atteindre une tension de seuil, le temps de décharge servant de mesure pour l'amplitude du signal de tension de récepteur totalisé.

7. Arrangement selon l'une des revendications précédentes, **caractérisé en ce que** les moyens d'interprétation comprennent au moins un comparateur (20, 26) et le signal de tension différentiel des signaux de tension de récepteur de deux bobines réceptrices (4, 5, 6, 7) respectives, de préférence opposées l'une à l'autre, peut être délivré à un comparateur (20, 26).

8. Arrangement selon la revendication 7, **caractérisé en ce que** pour comparer les signaux de tension de récepteur, les valeurs de seuil associées aux comparateurs (20, 26) peuvent être réglées à différentes valeurs.

9. Arrangement selon les revendications 7 et 8, **caractérisé en ce que** la valeur de seuil pour le signal de tension différentiel des signaux de tension de récepteur de deux bobines réceptrices (4, 5, 6, 7) opposées l'une à l'autre est dépendante de la valeur moyenne des signaux de tension de récepteur.

10. Arrangement selon la revendication 8, **caractérisé en ce que** la valeur de seuil pour le signal de tension de récepteur d'une bobine réceptrice (4, 5, 6, 7) est dépendante de l'amplitude du signal de tension de récepteur d'une autre bobine réceptrice (4, 5, 6, 7).

11. Arrangement selon la revendication 7, **caractérisé en ce que** les signaux de tension de récepteur de deux bobines réceptrices (4, 5, 6, 7) respectives, de préférence opposées l'une à l'autre, peuvent être comparés sur un comparateur (20, 26).

12. Arrangement selon l'une des revendications précédentes, **caractérisé en ce que** la portion (11) conductrice est réalisée sous la forme d'un conducteur en boucle qui présente une première portion de boucle (13) qui se trouve au-dessous de la bobine de codeur (3), et qui présente une deuxième portion de boucle (14) qui est disposée plus proche du bord de l'élément rotatif (1) dans le sens radial et qui peut être déplacée au-dessous des une ou plusieurs bobines réceptrices (4, 5, 6, 7).

13. Arrangement selon l'une des revendications précédentes, **caractérisé en ce qu'**au moins une bobine (3, 4, 5, 6, 7) est réalisée sous la forme d'une bobine imprimée sur un circuit imprimé.

14. Procédé pour détecter les tours accomplis par un élément rotatif en rotation et électriquement conducteur au moins dans certaines portions au moyen d'un dispositif de détection comprenant au moins une bobine de codeur, au moins une bobine réceptrice, des moyens d'alimentation électrique pulsée de la bobine de codeur et des moyens d'interprétation, les bobines étant de configuration plane et étant disposées dans le même plan l'une à côté de l'autre, lesquels génèrent dans au moins une bobine de codeur lors de son alimentation électrique un champ magnétique pulsé par le biais duquel la bobine de codeur et l'au moins une bobine réceptrice sont couplées de manière inductive et par le biais duquel un signal de tension de récepteur pulsé modulé est généré dans l'au moins une bobine réceptrice en fonction de la position de rotation de l'élément rotatif, lequel est interprété par les moyens d'interprétation, la bobine de codeur étant alimentée électriquement par des impulsions de courant constituées d'impulsions atténuées générées par un circuit oscillant et l'au moins un signal de tension de récepteur étant délivré à au moins un intégrateur de demi-onde muni d'un condensateur d'accumulation en vue de mémoriser la valeur de la tension du signal de bobine réceptrice d'une bobine réceptrice.
